# EUROPEAN PATENT APPLICATION

(11) **EP 4 678 538 A1**
(43) Date of publication of application: **14.01.2026**
(21) Application number: 23926204.1
(22) Date of filing: 06.03.2023
(51) Int. Cl.: B64G 1/62, B64G 1/24

(54) **FALLING RISK DETECTION METHOD, FALLING RISK DETECTION DEVICE, FLYING BODY, AND PROGRAM**

(71) Applicant: MITSUBISHI ELECTRIC CORPORATION, Chiyoda-ku Tokyo 100-8310 (JP)
(72) Inventor: IMAEDA, Ryunosuke, Tokyo 100-8310 (JP)
(74) Representative: Hoffmann Eitle
(86) International application number: PCT/JP2023/008245
(87) International publication number: WO 2024/184990

(57) **Abstract**

A tipping risk detecting device (100) includes a first-attitude-angle information acquirer (101), second-attitude-angle calculator (102), attitude variation calculator (103), and tipping risk detector (104). The first-attitude-angle information acquirer (101) acquires first-attitude-angle information on a first attitude angle of a probe (1) in the inertial system. The second-attitude-angle calculator (102) calculates a second attitude angle of the probe (1) relative to the gravitational-acceleration direction of the astronomical object, based on the attitude-angle information, gravitational-acceleration direction relative to the inertial system, and probe's (1) shape information. The attitude variation calculator (103) calculates an attitude variation of the probe (1), based on the second attitude angles at the current time and preceding start time. The tipping risk detector (104) detects risk of the probe (1) tipping during its landing on the astronomical object, based on the attitude variation and positional relationship of a landed leg's (20) tip and the probe's (1) gravity center.

## Description

### Technical Field

The present disclosure relates to a method of detecting the risk of tipping, a tipping risk detecting device, a flying body, and a program.

### Background Art

Some techniques have been known for detecting the risk of tipping of flying bodies during their landing. For example, Patent Literature 1 discloses a technique related to a probe, which is a type of the flying bodies. This technique detects an attitude angle of the probe relative to a ground of an astronomical object upon landing, evaluates the risk of tipping based on the detected attitude angle, and adjusts the attitude of the probe by injection in response to any risk of tipping.

### Citation List

### Patent Literature

Patent Literature 1: Unexamined Japanese Patent Application Publication No. 2021-17086

### Summary of Invention

### Technical Problem

The technique disclosed in Patent Literature 1 may fail to accurately detect the risk of tipping because the detection is not based on the gravity of the astronomical object. In an exemplary case where a flying body is going to land on a slanted ground, the flying body also receives a force in the horizontal direction relative to the ground because the gravity also has effects in the horizontal direction. This force is not considered in the technique disclosed in Patent Literature 1, and this technique may result in inaccurate detection of the risk of tipping.

An objective of the present disclosure, which has been accomplished to solve the above problem, is to provide a method of detecting the risk of tipping, a tipping risk detecting device, a flying body, and a program that can detect the risk of tipping of a flying body during its landing in view of the gravity of the astronomical object.

### Solution to Problem

In order to achieve the above objective, a method of detecting the risk of tipping of a flying body, including legs for landing, during its landing on an astronomical object according to the present disclosure involves: acquiring first-attitude-angle information on a first attitude angle that is an attitude angle of the flying body in an inertial system; calculating a second attitude angle that is an attitude angle of the flying body relative to a direction of gravitational acceleration, based on the attitude-angle information, the direction of gravitational acceleration of the astronomical object relative to the inertial system, and information on a shape of the flying body; calculating an attitude variation of the flying body, based on the second attitude angle at a current time and the second attitude angle at a start time preceding the current time; and detecting the risk of tipping of the flying body during its landing on the astronomical object based on the attitude variation and a positional relationship between a leg tip of one of the legs having landed on the astronomical object and the center of gravity of the flying body.

### Advantageous Effects of Invention

The present disclosure can detect the risk of tipping of a flying body during its landing in view of the gravity of the astronomical object.

### Brief Description of Drawings

FIG. 1 is a schematic view of a probe according to an embodiment of the present disclosure;
FIG. 2 is a block diagram illustrating a functional configuration of the probe according to the embodiment of the present disclosure;
FIG. 3 illustrates an exemplary attitude variation of the probe during its landing according to the embodiment of the present disclosure;
FIG. 4 illustrates an exemplary rotation of the probe during its landing according to the embodiment of the present disclosure;
FIG. 5 illustrates another exemplary rotation of the probe during its landing according to the embodiment of the present disclosure;
FIG. 6 illustrates an example in which a leg tip having landed is located further in the direction of gravitational acceleration than the center of gravity of the probe during its landing according to the embodiment of the present disclosure;
FIG. 7 illustrates an exemplary hardware configuration of a tipping risk detecting device according to the embodiment of the present disclosure; and
FIG. 8 is a flowchart illustrating exemplary operations for detection of the risk of tipping by the tipping risk detecting device according to the embodiment of the present disclosure.

### Description of Embodiments

The following describes an embodiment of the disclosure in which a flying body is applied as a probe, with reference to the accompanying drawings. In the drawings, the components identical or corresponding to each other are provided with the same reference symbol.

### Embodiment

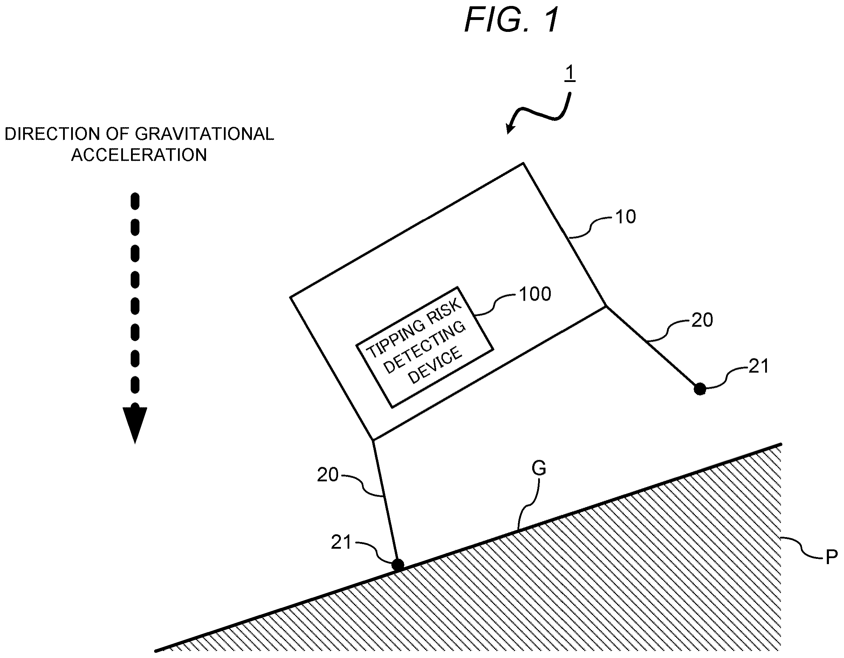

The following outlines a probe 1 according to an embodiment, with reference to FIG. 1. The probe 1 travels in the cosmic space and lands on a ground G of an astronomical object P. The probe 1 includes a body 10 and legs 20. The legs 20 are used for landing of the probe 1 on the ground G of the astronomical object P. The legs 20 have leg tips 21 to come into contact with the ground G upon landing of the probe 1. In the example illustrated in FIG. 1, the ground G is slanted and not orthogonal to the direction of gravitational acceleration of the astronomical object P. The probe 1 is an example of a flying body according to the present disclosure.

The body 10 of the probe 1 includes a tipping risk detecting device 100. The tipping risk detecting device 100 detects the risk of the probe 1 tipping over during its landing on the ground G. When the tipping risk detecting device 100 detects the risk of tipping, the probe 1 adjusts its attitude by controlling thrusters, which are not illustrated, for example.

The following assumes an example in which the probe 1 is rotating in the counterclockwise direction in FIG. 1. The behavior of the probe 1 depends on the magnitudes and directions of forces acting upon the probe 1. Specifically, the probe 1 may turn in a clockwise direction and succeed in landing because the forces inhibit the counterclockwise rotation, or may tip over because the forces do not inhibit the counterclockwise rotation. Such risk of tipping of the probe 1 can be detected by the tipping risk detecting device 100, as is described below. The tipping risk detecting device 100 is an example of a tipping risk detecting device according to the present disclosure.

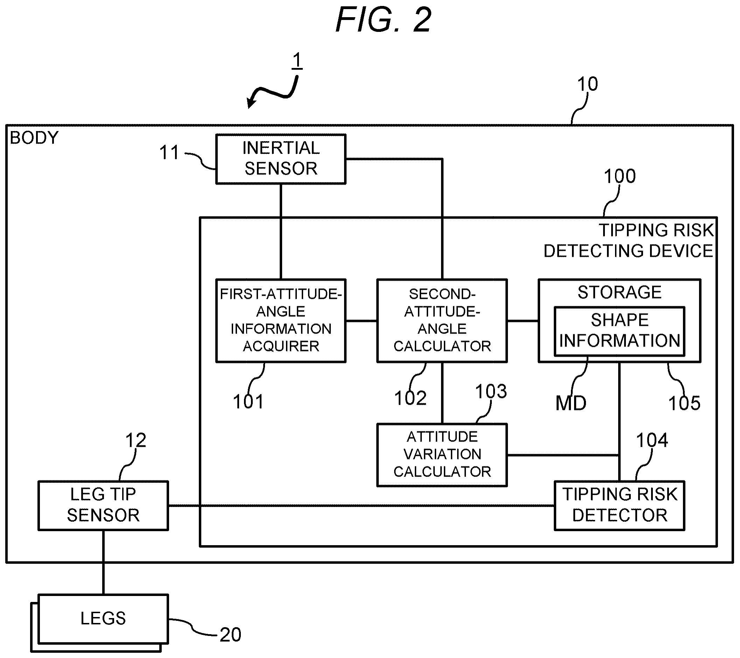

The following describes a functional configuration of the probe 1, with reference to FIG. 2. The probe 1 includes the body 10 and the legs 20, as described above. The body 10 includes an inertial sensor 11, leg tip sensors 12, and the tipping risk detecting device 100. The tipping risk detecting device 100 includes a first-attitude-angle information acquirer 101, a second-attitude-angle calculator 102, an attitude variation calculator 103, a tipping risk detector 104, and a storage 105.

The inertial sensor 11 detects an attitude angle of the probe 1 in the inertial system, a gravitational acceleration of the astronomical object P relative to the inertial system, and other parameters. The inertial sensor 11 may also detect an attitude angular rate of the probe 1 or an attitude angular acceleration of the probe 1, instead of or in addition to the attitude angle of the probe 1.

The attitude angle of the probe 1 in the inertial system is hereinafter referred to as "first attitude angle" to distinguish it from the attitude angle of the probe 1 relative to the direction of gravitational acceleration, which is described below.

The leg tip sensors 12 are provided to the respective leg tips 21 of the legs 20. Each of the leg tip sensors 12 identifies the position of the leg tip 21 of the leg 20 of the probe 1 in the inertial system, and detects contact of the leg tip 21 with the ground G.

The storage 105 stores shape information MD on the shape of the probe 1.

The first-attitude-angle information acquirer 101 acquires first-attitude-angle information, detected by the inertial sensor 11, on the first attitude angle of the probe 1 in the inertial system. The first-attitude-angle information acquirer 101 is an example of first-attitude-angle information acquisition means according to the present disclosure.

The first-attitude-angle information contains at least one of information indicating an attitude angle of the probe 1, information indicating an attitude angular rate of the probe 1 and information indicating an attitude angular acceleration of the probe 1 that are defined in the inertial system. The first-attitude-angle information may contain any one of the pieces of information from which the other pieces can be calculated through differentiation or integration. The first-attitude-angle information preferably contains two or more of the pieces of information in order to ensure the accuracy.

The second-attitude-angle calculator 102 calculates an attitude angle of the probe 1 relative to the direction of gravitational acceleration, on the basis of the first-attitude-angle information, the direction of gravitational acceleration relative to the inertial system detected by the inertial sensor 11, and the shape information MD stored in the storage 105. The attitude angle of the probe 1 relative to the direction of gravitational acceleration is hereinafter referred to as "second attitude angle" to distinguish it from the first attitude angle. The second-attitude-angle calculator 102 is an example of second-attitude-angle calculation means according to the present disclosure.

The attitude variation calculator 103 calculates an attitude variation of the probe 1, on the basis of the second attitude angle at the current time and the second attitude angle at a start time preceding the current time. This calculation is described more specifically below. The attitude variation calculator 103 is an example of attitude variation calculation means according to the present disclosure.

The attitude variation calculator 103 first sets a certain time to be the start time. For example, the attitude variation calculator 103 can set, as the start time, a time when one of the leg tips 21 of the legs 20 comes into contact with the ground G of the astronomical object P, that is, a time of the start of landing. The attitude variation calculator 103 temporarily retains the second attitude angle calculated at the start time by the second-attitude-angle calculator 102.

The attitude variation calculator 103 then calculates an attitude variation of the probe 1, on the basis of the temporarily retained second attitude angle at the start time, and the second attitude angle calculated by the second-attitude-angle calculator 102 at the current time.

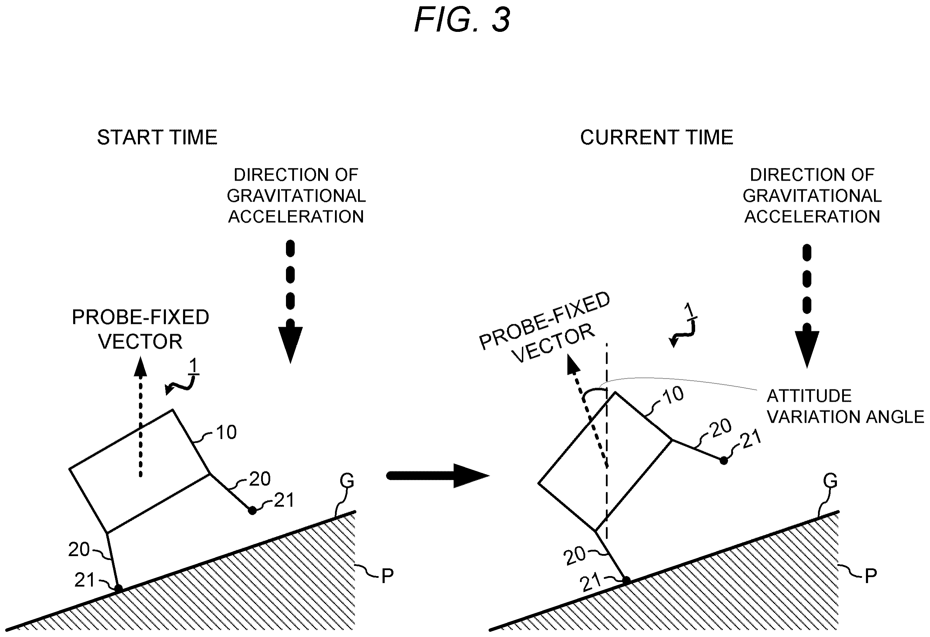

The following describes a specific example of calculation of an attitude variation by the attitude variation calculator 103, with reference to FIG. 3. The attitude variation calculator 103 fixes a vector parallel to the gravitational acceleration vector on the probe 1 at the start time, and defines this vector as a probe-fixed vector. This probe-fixed vector is fixed in the coordinate system based on the probe 1. That is, the probe-fixed vector is always fixed when observed from inside the probe 1 regardless of rotation of the probe 1. In contrast, the probe-fixed vector appears to rotate along with the probe 1 when observed from outside the probe 1, such as from the inertial system.

The attitude variation calculator 103 then, at the current time, calculates an angle between the probe-fixed vector at the current time and the gravitational acceleration vector. This angle between the probe-fixed vector at the current time and the gravitational acceleration vector is equal to an angle between the probe-fixed vector at the current time and the probe-fixed vector at the start time, because the probe-fixed vector was parallel to the gravitational acceleration vector at the start time. The calculated angle thus corresponds to the attitude variation angle of the probe 1. In this example, the "attitude variation angle" is used as an "attitude variation to be calculated".

For example, the probe-fixed vector at the current time is calculated as follows. The attitude variation calculator 103 first temporarily retains the second attitude angle at the start time. The attitude variation calculator 103 then calculates a probe-fixed vector at the current time, on the basis of the probe-fixed vector at the start time, and the difference between the second attitude angle at the start time and the second attitude angle at the current time. The difference between the second attitude angle at the start time and the second attitude angle at the current time is equal to the angular difference between the probe-fixed vector at the start time and the probe-fixed vector at the current time, because the probe-fixed vector is fixed in the coordinate system based on the probe 1.

Referring back to FIG. 2, the tipping risk detector 104 detects the risk of tipping based on the attitude variation and a positional relationship between one of the leg tips 21 and the center of gravity of the probe 1. In more detail, the tipping risk detector 104 detects the risk of tipping based on a result of comparison between the attitude variation and a threshold, and a positional relationship between the leg tip 21 having landed on the ground G and the center of gravity of the probe 1 at the current time. The threshold is preliminarily defined in accordance with the geometric positional relationship between the leg tip 21 and the center of gravity of the probe 1, as is described in detail below. The threshold is defined by a procedure described in detail below. The tipping risk detector 104 is an example of tipping risk detection means according to the present disclosure.

The tipping risk detector 104 identifies the position of the leg tip 21 by means of the leg tip sensor 12, and identifies the position of the center of gravity of the probe 1 by referring to the shape information MD stored in the storage 105.

The threshold is preliminarily defined in accordance with the geometric positional relationship between the leg tip 21 and the center of gravity of the probe 1, and the expected maximum inclination angle of the ground G of the astronomical object P. The geometric positional relationship between the leg tip 21 and the center of gravity of the probe 1 can be obtained from the shape of the probe 1. The threshold can thus be defined because the position of the leg tip 21 having landed and the position of the center of gravity of the probe 1 affect the direction of rotation of the probe 1 caused by the gravity after the landing of the leg tip 21 on the ground G, assuming no rotation of the probe 1 immediately before its landing.

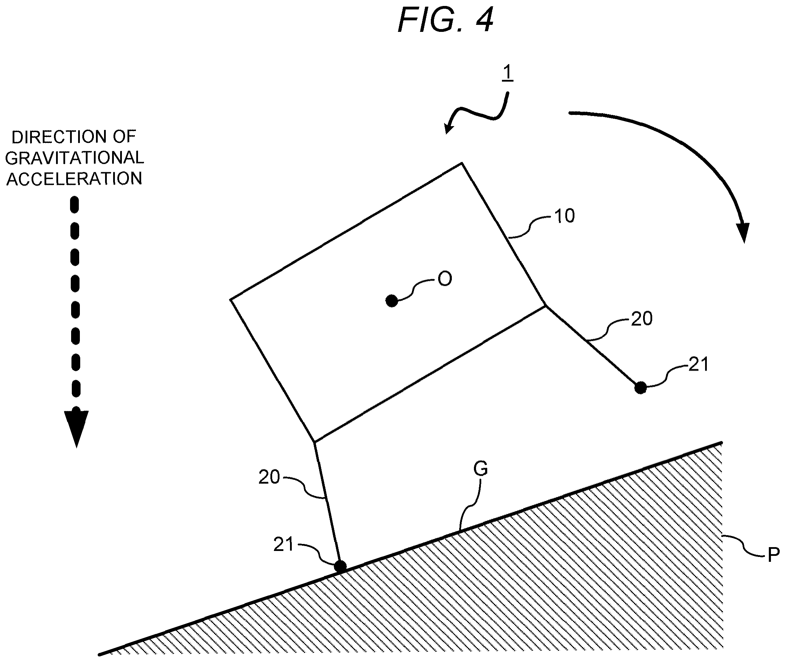

In an exemplary case where the leg tip 21 having landed and the center O of gravity of the probe 1 have the positional relationship illustrated in FIG. 4, the center O of gravity is located on the right side of the landed leg tip 21 in FIG. 4. The probe 1 thus rotates in the clockwise direction, so that the leg tips 21 having not landed come into contact with the ground G, assuming no rotation of the probe 1 immediately before its landing. That is, the probe 1 achieves stable landing.

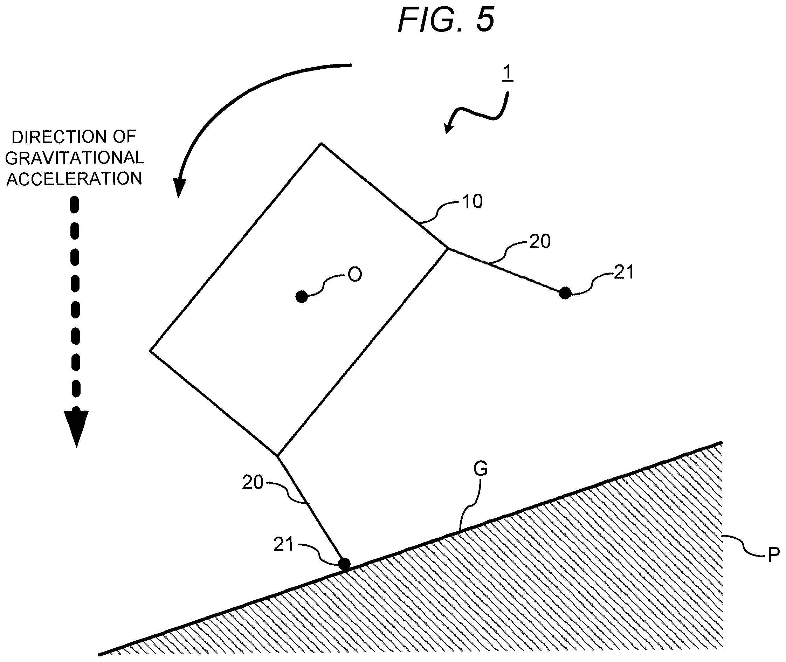

In another exemplary case where the leg tip 21 having landed and the center O of gravity of the probe 1 have the positional relationship illustrated in FIG. 5, the center O of gravity is located on the left side of the landed leg tip 21 in FIG. 5. The probe 1 thus rotates in the counterclockwise direction, so that the body 10 comes into contact with the ground G, assuming no rotation of the probe 1 immediately before its landing. That is, the probe 1 tips over.

The above-mentioned comparison thus uses, as the threshold, the attitude angle above which the probe 1 will tip over, in view of the static positional relationship between the leg tip 21 and the center O of gravity. The threshold is, however, actually defined in view of both the static relationship and possible dynamic factors of the probe 1, including a rotational speed and a rotational acceleration in the direction of tipping.

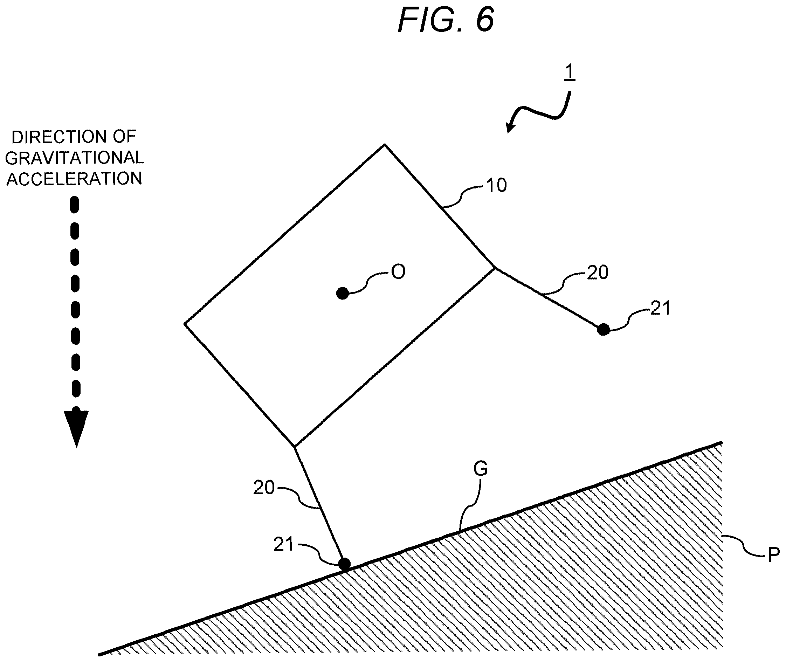

The following describes an exemplary process of detecting the risk of tipping by the tipping risk detector 104, with reference to FIG. 6. In FIG. 6, the leg tip 21 having landed is located further in the direction of gravitational acceleration than the center O of gravity of the probe 1. If the tipping risk detector 104 detects no risk of tipping from the start time associated with the state illustrated in FIG. 6 until exceedance of the attitude variation over the threshold, the movement in the direction of tipping may be irreversibly accelerated at the time of exceedance of the attitude variation over the threshold. In such a case, the tipping risk detector 104 preferably priorities the positional relationship at the current time between the leg tip 21 having landed on the ground G and the center of gravity of the probe 1, over the result of comparison between the attitude variation and the threshold, to detect the risk of tipping.

In contrast, in the case where the leg tip 21 having landed is significantly deviated from the center O of gravity of the probe 1 in the direction of gravitational acceleration at the start time, the movement in the direction of tipping is expected to be not sufficiently accelerated at the time of exceedance of the attitude variation over the threshold. In such a case, the tipping risk detector 104 preferably priorities the result of comparison between the attitude variation and the threshold, over the positional relationship at the current time between the leg tip 21 having landed on the ground G and the center of gravity of the probe 1, to detect the risk of tipping.

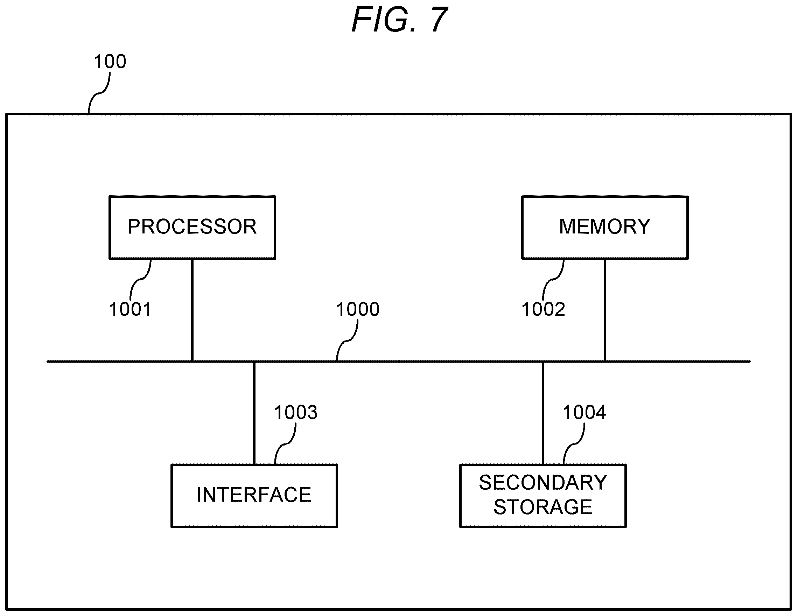

The following describes an exemplary hardware configuration of the tipping risk detecting device 100, with reference to FIG. 7. The tipping risk detecting device 100 illustrated in FIG. 7 is implemented using a micro-controller, which is a type of computer, for example. The computer is preferably resistant to cosmic radiation because the probe 1 travels in the cosmic space.

The tipping risk detecting device 100 includes a processor 1001, a memory 1002, an interface 1003, and a secondary storage 1004 connected to each other via buses 1000.

The processor 1001 is a central processing unit (CPU), for example. The processor 1001 loads the operational program stored in the secondary storage 1004 into the memory 1002 and executes the program, and thereby performs the individual functions of the tipping risk detecting device 100.

The memory 1002 is a main storage including a random access memory (RAM), for example. The memory 1002 stores the operational program that the processor 1001 loads from the secondary storage 1004. The memory 1002 serves as a working memory when the processor 1001 executes the operational program.

The interface 1003 is an input/output (I/O) interface, such as serial port, universal serial bus (USB) port, or network interface, for example. The interface 1003 is connected to the inertial sensor 11 and the leg tip sensors 12.

The secondary storage 1004 is a flash memory, a hard disk drive (HDD), or a solid state drive (SSD), for example. The secondary storage 1004 stores the operational program to be executed by the processor 1001. The secondary storage 1004 performs functions of the storage 105.

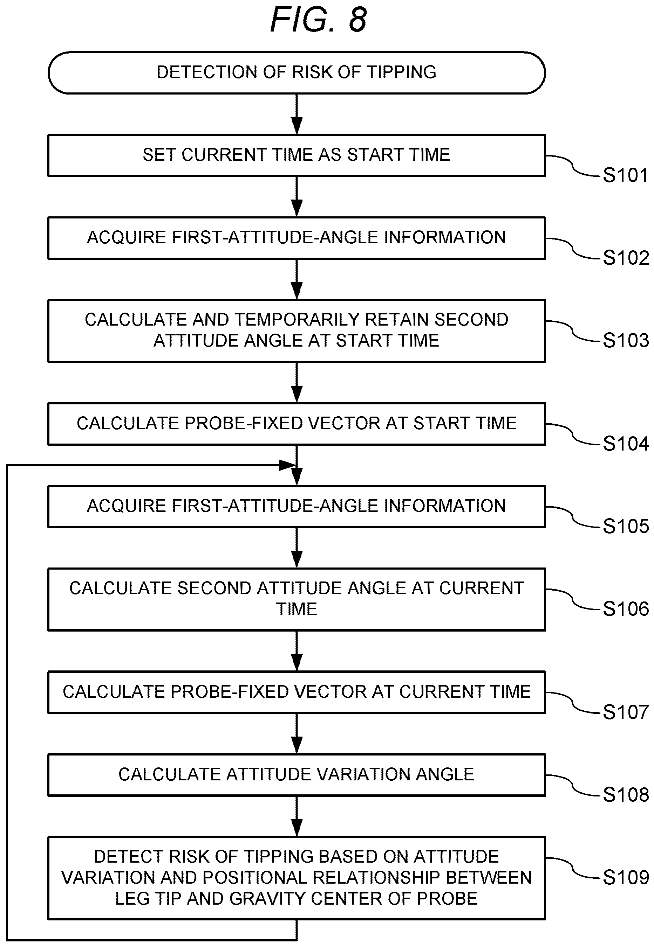

The following describes exemplary operations for detection of the risk of tipping by the tipping risk detecting device 100 of the probe 1, with reference to FIG. 8. The operations illustrated in FIG. 8 are started, for example, in response to landing of one of the leg tips 21 of the legs 20 of the probe 1 on the ground G of the astronomical object P accompanied by detection of contact of the leg tip 21 with the ground G by the leg tip sensor 12. That is, the operations illustrated in FIG. 8 are started upon landing of the probe 1, for example.

The attitude variation calculator 103 sets the current time as the start time (Step S101). The current time in Step S101 is appropriate as the start time, because Step S101 is executed immediately after the start of landing of the probe 1.

The first-attitude-angle information acquirer 101 then acquires first-attitude-angle information (Step S102). The first-attitude-angle information acquired in this step corresponds to the first-attitude-angle information at the start time, because Step S102 is executed immediately after Step S101.

The second-attitude-angle calculator 102 then calculates a second attitude angle at the start time, on the basis of the first-attitude-angle information acquired in Step S102, the direction of gravitational acceleration in the inertial system detected by the inertial sensor 11, and the shape information MD stored in the storage 105, and temporarily retains the calculated second attitude angle (Step S103).

The attitude variation calculator 103 then calculates a probe-fixed vector at the start time (Step S104). The probe-fixed vector at the start time is parallel to the direction of gravitational acceleration. The probe-fixed vector calculated in Step S104 corresponds to the probe-fixed vector at the start time, because Step S104 is executed shortly after Step S101.

Steps S105 to S109 described below are repetitively executed, and provide values regarded as the values at the current time.

The first-attitude-angle information acquirer 101 acquires first-attitude-angle information (Step S105). The first-attitude-angle information acquired in this step indicates the first attitude angle at the current time.

The second-attitude-angle calculator 102 then calculates a second attitude angle at the current time, on the basis of the first-attitude-angle information acquired in Step S105, the direction of gravitational acceleration in the inertial system detected by the inertial sensor 11, and the shape information MD stored in the storage 105 (Step S106).

The attitude variation calculator 103 then calculates a probe-fixed vector at the current time, on the basis of the second attitude angle at the current time calculated in Step S106, the second attitude angle at the start time calculated in Step S103 and temporality retained, and the probe-fixed vector at the start time calculated in Step S104 (Step S107).

The attitude variation calculator 103 then obtains an attitude variation angle by calculating an angle between the probe-fixed vector at the start time calculated in Step S104 and the probe-fixed vector at the current time calculated in Step S107 (Step S108).

The tipping risk detector 104 then detects the risk of tipping based on the attitude variation and the positional relationship between a leg tip 21 and the center of gravity of the probe 1 (Step S109). In more detail, the tipping risk detector 104 detects the risk of tipping of the probe 1 based on the result of comparison between the attitude variation angle calculated in Step S108 and the threshold, and the positional relationship at the current time between the leg tip 21 having landed and the center of gravity of the probe 1 (Step S109). Step S105 and the following steps are then repeated.

The probe 1 according to the embodiment has the above-described configuration. The tipping risk detecting device 100 of the probe 1 calculates a second attitude angle of the probe 1 relative to the direction of gravitational acceleration of the astronomical object P, and calculates an attitude variation on the basis of the second attitude angle at the start time and the second attitude angle at the current time. The tipping risk detecting device 100 detects the risk of tipping based on the result of comparison between the attitude variation and the threshold, and the positional relationship at the current time between the leg tip 21 having landed and the center of gravity of the probe 1. The detection of the risk of tipping uses the threshold defined in view of the static geometric positional relationship between the leg tip 21 having landed and the center of gravity of the probe 1, relative to the direction of gravitational acceleration. The tipping risk detecting device 100 can therefore detect the risk of tipping of the probe 1 during its landing in view of the gravity of the astronomical object P.

### Modification 1

The above-described embodiment uses the time of start of landing as an example of the start time. However, if a long period has passed from the start time to the current time, errors may be accumulated in the parameters, such as second attitude angles and probe-fixed vectors, calculated based on sensor values, leading to misdetection of the risk of tipping. In an exemplary case where the inertial sensor 11 detects an attitude angular rate and calculates an attitude angle by integrating the attitude angular rate, the parameters are supposed to contain accumulated errors, such as integration error and drift error. To solve this problem of errors, the tipping risk detecting device 100 may update the start time every certain period. This mode of updating the start time every certain period can reduce the misdetection of the risk of tipping regardless of accumulated errors, because the calculations are based on the parameters containing the accumulated errors.

Alternatively, the tipping risk detecting device 100 may transition between the mode of setting the time of start of landing as the start time and the mode of updating the start time every certain period. For example, the tipping risk detecting device 100 may operate in the mode of setting the time of start of landing as the start time in the case of large fluctuations in the attitude angle, and may operate in the mode of updating the start time every certain period in the case of small fluctuations in the attitude angle.

### Modification 2

The flying body according to the present disclosure, which is applied as the probe 1 in the above-described embodiment, may also be applied as a flying body other than the probe. For example, the flying body according to the present disclosure may be applied as a drone traveling in the Earth's atmosphere. The flying body according to the present disclosure can be applied as a drone, because the drone also suffers from the risk of tipping.

### Modification 3

The tipping risk detecting device 100 executes all the calculations required for detection of the risk of tipping in the above-described embodiment. Instead, the tipping risk detecting device 100 may communicate with an external apparatus that executes some of the calculations, other than the tipping risk detecting device 100. For example, the functions of the attitude variation calculator 103 among the functions of the tipping risk detecting device 100 may be transferred to the external apparatus. In particular, in the case of the flying body according to the present disclosure applied as a drone, the external apparatus installed on the ground may communicate with the drone traveling in the Earth's atmosphere and execute the calculations for obtaining an attitude variation.

### Modification 4

The tipping risk detecting device 100 identifies the direction of gravitational acceleration of the astronomical object P by means of the inertial sensor 11 in the above-described embodiment. Instead, the tipping risk detecting device 100 may receive information on the direction of gravitational acceleration of the astronomical object P distributed via wireless communication from an external apparatus other than the tipping risk detecting device 100, and may use the received information to identify the direction of gravitational acceleration of the astronomical object P. For example, the direction of gravitational acceleration of the astronomical object P may be distributed from a base station installed on the Earth.

### Modification 5

The tipping risk detecting device 100 identifies the direction of gravitational acceleration by means of the inertial sensor 11 in the above-described embodiment. The inertial sensor 11, however, cannot directly detect the gravitational acceleration during the free fall of the probe 1, because the gravitational acceleration appears to be zero inside the probe 1 during its free fall. To deal with this problem, the tipping risk detecting device 100 may have the functions described below.

The tipping risk detecting device 100 may estimate the direction of acceleration during the free fall in real time, on the basis of the direction of acceleration identified by the inertial sensor 11 before the start of the free fall. Specifically, the tipping risk detecting device 100 may calculate and estimate the direction of gravitational acceleration in real time, on the basis of the attitude of the probe 1 that varies with time during the free fall relative to the direction of acceleration identified before the start of the free fall. This calculation along a temporal axis executed during the free fall is called "propagation calculation".

This propagation calculation is also effective in the case where the astronomical object P has microgravity and the inertial sensor 11 is less efficient and lacks a resolution sufficient to directly measure the gravity of the astronomical object P.

### Other modifications

Although the tipping risk detecting device 100 includes the secondary storage 1004 in the hardware configuration illustrated in FIG. 7, this configuration is a mere example. The secondary storage 1004 may also be disposed outside the tipping risk detecting device 100, and connected to the tipping risk detecting device 100 via the interface 1003. In this modification, the secondary storage 1004 may be a removable medium, such as USB flash drive or memory card.

Instead of the hardware configuration illustrated in FIG. 7, the tipping risk detecting device 100 may be implemented using a dedicated circuit including an application specific integrated circuit (ASIC) or a field programmable gate array (FPGA), for example. Alternatively, the functions of the tipping risk detecting device 100 in the hardware configuration illustrated in FIG. 7 may be partially performed by a dedicated circuit connected to the interface 1003, for example.

The program used in the tipping risk detecting device 100 may be stored in a non-transitory computer-readable recording medium, such as compact disc read only memory (CD-ROM), digital versatile disc (DVD), USB flash drive, memory card, or HDD, to be distributed. This program can be installed in a specific computer or general-purpose computer to cause the computer to function as the tipping risk detecting device 100.

The program may also be stored in a storage included in another server on the Internet and downloaded from the server into a computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

- 1: Probe
- 10: Body
- 11: Inertial sensor
- 12: Leg tip sensor
- 20: Leg
- 21: Leg tip
- 100: Tipping risk detecting device
- 101: First-attitude-angle information acquirer
- 102: Second-attitude-angle calculator
- 103: Attitude variation calculator
- 104: Tipping risk detector
- 105: Storage
- 1000: Bus
- 1001: Processor
- 1002: Memory
- 1003: Interface
- 1004: Secondary storage
- G: Ground
- MD: Shape information
- O: Center of gravity
- P: Astronomical object

## Claims

1. A method of detecting risk of tipping of a flying body during its landing on an astronomical object, the flying body including legs for landing, the method comprising:
acquiring first-attitude-angle information on a first attitude angle, the first attitude angle being an attitude angle of the flying body in an inertial system;
calculating a second attitude angle, based on the attitude-angle information, a direction of gravitational acceleration of the astronomical object relative to the inertial system, and information on a shape of the flying body, the second attitude angle being an attitude angle of the flying body relative to the direction of gravitational acceleration;
calculating an attitude variation of the flying body, based on the second attitude angle at a current time and the second attitude angle at a start time preceding the current time; and
detecting, based on the attitude variation and a positional relationship between a leg tip of one of the legs having landed on the astronomical object and a center of gravity of the flying body, risk of tipping of the flying body during its landing on the astronomical object.

2. The method of detecting risk of tipping according to claim 1, wherein the first-attitude-angle information includes at least one of information indicating an attitude angle of the flying body, information indicating an attitude angular rate of the flying body, or information indicating an attitude angular acceleration of the flying body.

3. The method of detecting risk of tipping according to claim 1 or 2, wherein the direction of gravitational acceleration is identified based on at least one of information acquired from a sensor included in the flying body, information distributed to the flying body from an outside of the flying body, or information acquired through a propagation calculation based on acceleration information and an attitude variation of the flying body during a free fall, the acceleration information being acquired from a sensor included in the flying body before start of the free fall of the flying body.

4. The method of detecting risk of tipping according to any one of claims 1 to 3, wherein the start time indicates a time of start of landing of the flying body on the astronomical object.

5. The method of detecting risk of tipping according to any one of claims 1 to 3, wherein the start time is updated every certain period.

6. The method of detecting risk of tipping according to any one of claims 1 to 3, wherein the method is able to transition between a mode of setting a time of start of landing of the flying body on the astronomical object as the start time and a mode of updating the start time every certain period.

7. A tipping risk detecting device for detecting risk of tipping of a flying body during its landing on an astronomical object, the flying body including legs for landing, the tipping risk detecting device comprising:
first-attitude-angle information acquisition means for acquiring first-attitude-angle information on a first attitude angle, the first attitude angle being an attitude angle of the flying body in an inertial system;
second-attitude-angle calculation means for calculating a second attitude angle, based on the attitude-angle information, a direction of gravitational acceleration of the astronomical object relative to the inertial system, and information on a shape of the flying body, the second attitude angle being an attitude angle of the flying body relative to the direction of gravitational acceleration;
attitude variation calculation means for calculating an attitude variation of the flying body, based on the second attitude angle at a current time and the second attitude angle at a start time preceding the current time; and
tipping risk detection means for detecting, based on the attitude variation and a positional relationship between a leg tip of one of the legs having landed on the astronomical object and a center of gravity of the flying body, risk of tipping of the flying body during its landing on the astronomical object.

8. A flying body comprising the tipping risk detecting device according to claim 7.

9. A program for causing a computer to detect risk of tipping of a flying body during its landing on an astronomical object, the flying body including legs for landing, the program causing the computer to:
acquire first-attitude-angle information on a first attitude angle, the first attitude angle being an attitude angle of the flying body in an inertial system;
calculate a second attitude angle, based on the attitude-angle information, a direction of gravitational acceleration of the astronomical object relative to the inertial system, and information on a shape of the flying body, the second attitude angle being an attitude angle of the flying body relative to the direction of gravitational acceleration;
calculate an attitude variation of the flying body, based on the second attitude angle at a current time and the second attitude angle at a start time preceding the current time; and
detect, based on the attitude variation and a positional relationship between a leg tip of one of the legs having landed on the astronomical object and a center of gravity of the flying body, risk of tipping of the flying body during its landing on the astronomical object.
